(19) Europäisches Patentamt
European Patent Office
Office européen des brevets

(11) **EP 4 361 293 B1**

(12) **EUROPEAN PATENT SPECIFICATION**

(45) Date of publication and mention
of the grant of the patent:
**03.12.2025 Bulletin 2025/49**

(21) Application number: **22852803.0**

(22) Date of filing: **14.07.2022**

(51) International Patent Classification (IPC):
*C21C 7/10* (2006.01)    *C21C 7/04* (2006.01)
*C21C 7/06* (2006.01)    *C21C 7/00* (2006.01)

(52) Cooperative Patent Classification (CPC):
**C21C 7/10; C21C 7/0006; C21C 7/06;** Y02P 10/20

(86) International application number:
**PCT/JP2022/027639**

(87) International publication number:
**WO 2023/013377 (09.02.2023 Gazette 2023/06)**

(54) **METHOD FOR DEOXIDATION REFINING OF MOLTEN STEEL, METHOD FOR PRODUCING STEEL MATERIAL, AND STEEL MATERIAL THEREOF**

VERFAHREN ZUR DESOXIDATIONSRAFFINATION VON GESCHMOLZEN STAHL, VERFAHREN ZUR HERSTELLUNG VON STAHLMATERIAL UND STAHLMATERIAL DAVON

PROCÉDÉ POUR L'AFFINAGE PAR DÉSOXYDATION D'ACIER FONDU, PROCÉDÉ POUR PRODUIRE DE L'ACIER ET ACIER ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2021 JP 2021129090**

(43) Date of publication of application:
**01.05.2024 Bulletin 2024/18**

(73) Proprietor: **JFE Steel Corporation
Tokyo 100-0011 (JP)**

(72) Inventors:
• **MIZOBATA, Keisuke**
**Tokyo 100-0011 (JP)**
• **NEGISHI, Hidemitsu**
**Tokyo 100-0011 (JP)**
• **MURAI, Takeshi**
**Tokyo 100-0011 (JP)**

(74) Representative: **Grünecker Patent- und
Rechtsanwälte
PartG mbB
Leopoldstraße 4
80802 München (DE)**

(56) References cited:
**JP-A- 2002 241 832    JP-A- 2002 241 832
JP-A- 2007 092 159    JP-A- 2007 177 296
US-A1- 2009 019 968**

**Description**

Technical Field

The present invention relates to a method for deoxidation refining of molten steel that improves the yield of Al added in deoxidation of molten steel using a vacuum refining equipment.

Background Art

In a steelmaking step of iron and steel production, decarburization blowing (referred to as "primary refining") of molten pig iron is performed in a converter. In common practice, the molten steel produced is then tapped into a ladle, and the molten steel inside the ladle is circulated to a vacuum vessel of a vacuum refining equipment, for example, an RH vacuum degassing equipment, and is refined under reduced pressure (referred to as "secondary refining").
In the case where a vacuum refining of un-deoxidized or half-deoxidized molten steel is performed in secondary refining using a vacuum refining equipment, such as an RH degasser or a DH degasser, deoxidation refining of the molten steel is generally performed by adding metallic Al or the like during the treatment to the molten steel present in a vacuum vessel having a vacuum atmosphere.
The vacuum refining equipment is installed on the upper side of the ladle, and the molten steel inside the ladle rises to the vacuum vessel of the vacuum refining equipment and is subjected to a vacuum refining treatment. A raw material feed port is provided in an upper side surface or a canopy of this vacuum vessel, and an Al-containing substance, such as metallic Al or alloy Al, is dropped into the vacuum vessel through this port to perform deoxidation refining of the molten steel by Al.
However, in this deoxidation refining of molten steel, the Al-containing substance dropped into the vacuum vessel has a low yield of Al in the molten steel. Accordingly, the amount of Al-containing substance to be added increases, causing prolongation of the treatment time, an increase in the raw material cost, etc., which are factors contributing to increasing the vacuum refining cost. Moreover, when the yield of Al in the molten steel decreases, the yield becomes unstable, so that the steel material having undergone the iron and steel production step may vary in the ingredient amount of Al.
To solve these problems, techniques for improving the yield of Al to be added have been proposed.
For example, Patent Literature 1 proposes a technique that reduces evaporation loss of Al and improves the yield thereof by adding an Al-containing substance to molten steel in an immersed state at a low degree of vacuum of 40 Torr (5333 Pa) or more during a period until the added Al diffuses and is alloyed. When diffusion and alloying of metallic Al in the molten steel are promoted with the degree of vacuum set to 40 Torr (5333 Pa) or more until 12 minutes elapses from the start of depressurization, evaporation and volatilization of Al are reduced. In this invention, it is mentioned that the Al yield becomes higher than that in a conventional pattern in which the degree of vacuum is set to a high vacuum of less than 40 Torr (5333 Pa) at once after the addition of Al. The deoxidation time is 15 to 20 minutes.
Non Patent Literature 1 proposes a technique that improves the Al yield by firing Al bullets into molten steel by means of compressed gas such that the Al bullets enter deep into the molten steel. Patent Literature 2 and 3 further disclose a method for deoxidation refining of molten steel.

Citation List

Patent Literature

Patent Literature 1: JP-H03-211216A
Patent Literature 2: US 2009/019968 A1
Patent Literature 3: JP 2002 241832 A

Non Patent Literature

Non Patent Literature 1: Sumitomo Metal Technical Report, Vol. 25, p. 30

Summary of Invention

Technical Problem

The above-described conventional techniques have the following problems.

In the technique described in Patent Literature 1, compared with preceding techniques, the vacuum degree worsens before deoxidation is completed (a degree of vacuum of 5333 Pa or more is held for 12 minutes or longer), which causes prolongation of the vacuum refining time. Another problem is that when Al is added during deoxidation, a locally hot part occurs due to the oxidation reaction of Al. Thus, even in a low vacuum, the steam pressure of Al exceeds the atmospheric pressure, so that Al evaporates and the evaporation loss of Al cannot be sufficiently reduced.

The technique described in Non Patent Literature 1 has a problem that the facility cost increases due to the necessity of newly building a gas bullet firing device.

The present invention has been made in view of these circumstances, and aims to propose a method for deoxidation refining of molten steel that takes a short time for a vacuum refining and improves the yield of Al to be added. Further, the present invention aims to propose a method for producing steel material that improves the yield of Al to be added in vacuum refining and causes little variation in the ingredient amount of Al.

Solution to Problem

To solve the above-described problems, the present inventors vigorously conducted experiments and studies. As a result, the present inventors found that the Al yield improved when an Al-containing substance was added under the condition that the amount of temperature fall due to the sensible heat of the Al-containing substance to be added exceeded the amount of temperature rise due to the heat of the oxidation reaction of Al.

Based on this insight, the present invention is configured as follows.

[1] A method for deoxidation refining of molten steel using a vacuum refining equipment, wherein an Al-containing substance is added to molten steel inside a vacuum vessel, and temperature changes $\Delta T_1$ and $\Delta T_2$ of the molten steel during Al deoxidation meet Formula (1):

$$\Delta T_1 + \Delta T_2 < 0 \cdots (1),$$

where $\Delta T_1$ and $\Delta T_2$ are temperature changes (°C) respectively defined by:

$$\Delta T_1 = (W_{Re\_Al} \times Q_{Al\text{-}O}) / (C_{steel} \times W_{Re\_STEEL}) \cdots (2)$$

$$\Delta T_2 = -(V_{Al} / 0.01 X_{Al} \times t_1 \times Q_{Al\_Alloy\text{-}C}) / (C_{steel} \times W_{Re\_STEEL}) \cdots (3),$$

$t_1$ is the time (s) elapsed from when the addition of the Al-containing substance is started until the molten steel present inside the vacuum vessel at the start of addition of the Al-containing substance has circulated and become displaced,

$W_{Re\_Al}$ is mass (kg) of metallic Al used for a deoxidation reaction during the time $t_1$,

$Q_{Al\text{-}O}$ is heat (kJ/kg-Al) of an oxidation reaction of Al,

$C_{steel}$ is specific heat (kJ/kg/°C) of the molten steel,

$W_{Re\_STEEL}$ is mass (kg) of molten steel used for the deoxidation reaction during the time $t_1$,

$V_{Al}$ is the addition rate (kg/s) of metallic Al,

$X_{Al}$ is the Al content (mass%) in the Al-containing substance, and

$Q_{Al\_Alloy\text{-}C}$ is sensible heat and latent heat (kJ/kg) of the Al-containing substance.

[2] In the method for deoxidation refining of molten steel described in [1], it is preferable that the Al content in the Al-containing substance be 30 to 80 mass%.

[3] A method for producing steel material that includes the method for deoxidation refining of molten steel described in [1] or [2] as a deoxidation step, and in which the range of an Al concentration in steel after the deoxidation step is 0.02 mass% or less.

[4] A steel material that is produced by the method for deoxidation refining of molten steel described in [1] or [2] as a deoxidation step, and in which the range of an Al concentration in steel after the deoxidation step is 0.02 mass% or less.

[5] In the steel material described in [4], it is preferable that the range of the Al concentration be a standard range of an Al ingredient.

Advantageous Effects of Invention

In a vacuum refining step of an iron and steel production process, the present invention has extremely significant industrial and resource-saving effects such as taking a short treatment time for deoxidation by Al added, improving the yield of Al added, being able to realize high productivity and a low production cost, and further being able to provide products that vary very little in the ingredient amount of Al in steel material.

Brief Description of Drawings

FIG. 1 is a schematic vertical sectional view showing one example of an RH vacuum degassing equipment.
FIG. 2 is an enlarged sectional view of the RH vacuum degassing equipment representing the concept of the present invention.
FIG. 3 is a graph showing an influence that changes in heat amount of molten steel before and after the addition of Al have on an Al evaporation ratio.
FIG. 4 is a graph showing behavior of a molten steel temperature during Al deoxidation according to a difference in conditions for adding Al.

Description of Embodiment

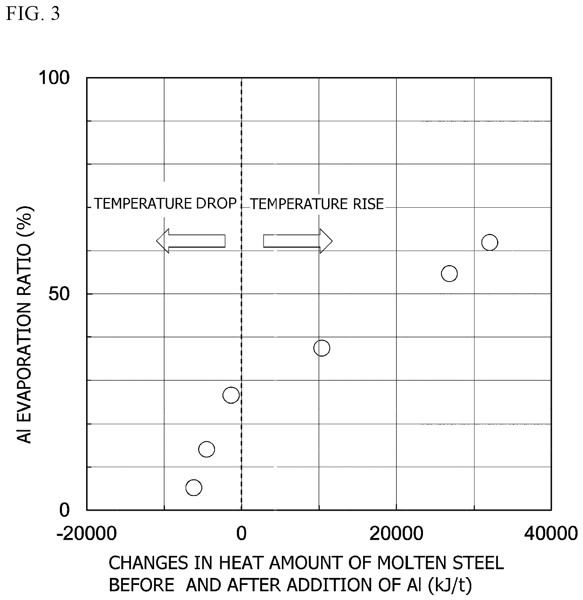

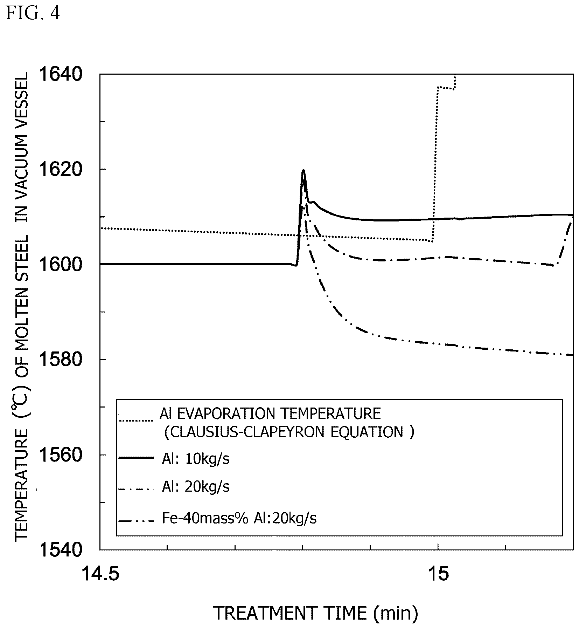

To evaluate the amount of evaporation loss of Al during deoxidation, the present inventors conducted a deoxidation test of molten steel under various conditions using a small-sized vacuum melting furnace. As a result, as shown in FIG. 3, the present inventors found that the Al evaporation ratio was correlated with changes in heat amount of molten steel before and after the addition of Al, and that particularly the amount of evaporation loss of Al decreased significantly in a region where the change in heat amount became negative. Here, a change in heat amount is the sum of (1) the oxidation heat of Al during deoxidation and (2) the sensible heat of an Al-containing substance added per unit time. Further, as shown in FIG. 4, the present inventors compared the evaporation temperature of Al in an RH vacuum degassing equipment and the temperature transition of molten steel inside a vacuum vessel under various conditions for adding Al alloy. As a result, the present inventors found that increasing the rate of adding the Al-containing substance or using FeAl as the Al-containing substance increased the amount of temperature fall due to the sensible heat of the substance added and shortened the time for which the temperature of the molten steel inside the vacuum vessel remained above the evaporation temperature of Al.

Thus, in the deoxidation in the vacuum refining equipment, the present inventors studied temperature changes due to the sensible heat and the heat of the oxidation reaction of the Al-containing substance added, and the yield of Al added to molten steel, and closely examined the effect that the temperature change of a reaction site due to the Al-containing substance added had on the Al yield. As a result, the present inventors found that the temperature of the reaction site due to the sensible heat and the heat of the oxidation reaction of the Al-containing substance added affected the yield of Al added, and that controlling the temperature of the reaction site could improve the Al yield.

In the present invention, the temperature at the site of an Al deoxidation reaction is controlled such that the amount of temperature drop due to the sensible heat of the Al-containing substance added to the molten steel becomes larger than the amount of temperature rise due to the heat of the oxidation reaction of Al added. The technical idea of the present invention lies in that, compared with conventional deoxidation methods, it takes a considerably shorter treatment time and improves the yield of Al added.

The method for deoxidation refining of molten steel according to the present invention will be described in detail below.

Examples of vacuum refining equipment that can implement the method for deoxidation refining of molten steel according to the present invention include an RH vacuum degassing equipment, a DH vacuum degassing equipment, and a REDA vacuum degassing equipment, among which an RH vacuum degassing equipment is most representative.

Therefore, first, a vacuum refining method in an RH vacuum degassing equipment will be described.

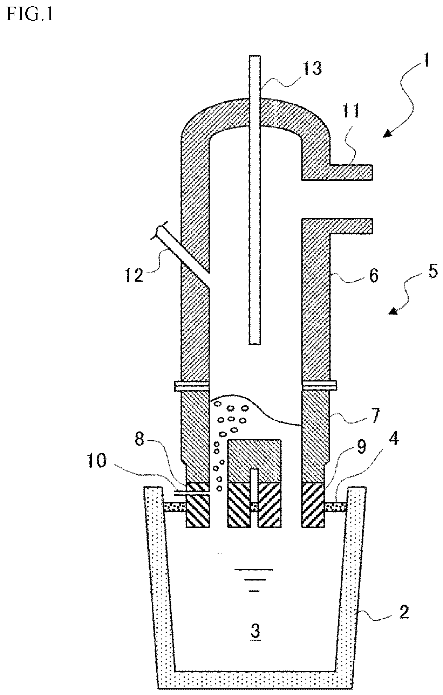

In FIG. 1, reference sign 1 denotes an RH vacuum degassing equipment; 2 denotes a ladle; 3 denotes molten steel; 4 denotes slag; 5 denotes a vacuum vessel; 6 denotes an upper vessel; 7 denotes a lower vessel; 8 denotes a rising-side snorkel (up-leg); 9 denotes a descending-side snorkel (down-leg); 10 denotes a circulation gas blowing pipe; 11 denotes a duct; 12 denotes a raw material feed port; and 13 denotes a top-blowing lance. The vacuum vessel 5 is composed of the upper vessel 6 and the lower vessel 7. The top-blowing lance 13 is a device through which oxygen gas or flux is added by blowing onto molten steel inside the vacuum vessel, and is installed at an upper part of the vacuum vessel 5 so as to be able to move up and down inside the vacuum vessel 5.

In the RH vacuum degassing equipment 1, the ladle 2 containing the molten steel 3 is raised by a raising-lowering device (not shown), and the rising-side snorkel 8 and the descending-side snorkel 9 are immersed into the molten steel 3 inside the ladle 2. Then, the inside of the vacuum vessel 5 is evacuated by an evacuation device (not shown) coupled to the duct 11 to depressurize the inside of the vacuum vessel 5, while circulation gas is blown into the rising-side snorkel 8 through the circulation gas blowing pipe 10. When the inside of the vacuum vessel 5 is depressurized, the molten steel 3 inside the ladle 2 rises in proportion to the difference between the atmospheric pressure and the pressure (the degree of vacuum) inside the vacuum vessel 5 and flows into the vacuum vessel 5. At the same time, by the gas lift effect of the circulation gas blown in through the circulation gas blowing pipe 10, the molten steel 3 rises in the rising-side snorkel 8 along with the circulation gas and flows into the vacuum vessel 5. Thereafter, the molten steel 3 forms the flow that returns to the ladle 2 via the descending-side snorkel 9, or a so-called circulation flow, and thus RH vacuum refining is performed.

As the molten steel 3 is exposed to the depressurized atmosphere inside the vacuum vessel 5, gas ingredients in the molten steel 3 move to the atmosphere inside the vacuum vessel 5, and the degassing reaction of the molten steel 3 progresses. In the case where a deoxidation of un-deoxidized molten steel or half-deoxidized molten steel is performed in RH vacuum refining, an alloy that reacts with oxygen to form oxide is added as a deoxidizing agent through the raw material feed port 12 to the molten steel 3 inside the vacuum vessel 5. As the deoxidizing agent, metallic Al or Al-containing alloy is commonly used for their high deoxidation capacity.

In the present invention, to reduce the evaporation loss of Al in deoxidation of molten steel, the amount of temperature drop due to the sensible heat of the Al-containing substance added is made larger than the amount of temperature rise due to the heat of the oxidation reaction of Al added. Specifically, the deoxidation is performed with the operation conditions determined such that the sum of the former temperature change amount $\Delta T_1$ and the latter temperature change amount $\Delta T_2$ becomes negative as in Formula (1).

$$\Delta T_1 + \Delta T_2 < 0$$

The temperature change amount $\Delta T_1$ due to the heat of the oxidation reaction of Al added and the temperature change amount $\Delta T_2$ due to the sensible heat (including the latent heat) of the Al-containing substance added are defined by Formula (2) and Formula (3), respectively, and the temperature change amounts $\Delta T_1$ and $\Delta T_2$ are controlled by each of energies in Formula (4) to Formula (7) so as to meet Formula (1).

$$\Delta T_1 + \Delta T_2 < 0 \cdots (1)$$

Here, $\Delta T_1$ and $\Delta T_2$ in Formula (1) are defined by Formula (2) and Formula (3):

$$\Delta T_1 = (W_{Re\_Al} \times Q_{Al\text{-}O}) / (C_{steel} \times W_{Re\_STEEL}) \cdots (2)$$

$$\Delta T_2 = -(V_{Al} / 0.01 X_{Al} \times t_1 \times Q_{Al\_Alloy\text{-}C}) / (C_{steel} \times W_{Re\_STEEL}) \cdots (3)$$

$$W_{Re\_Al} = MIN [W_{Re\_STEEL} \times a_O / f_O \times 1.0 \times 10^{-6} \times 54 / 48, V_{Al} \times t_1] \cdots (4) \tag{4}$$

MIN [A, B] means the value of A or B, whichever is smaller.

$$W_{Re\ STEEL} = Q_{Cir} \times t_1 \cdots (5)$$

$$t_1 = W_V / Q_{cir} \cdots (6)$$

$$Q_{cir} = K \times G^{1/3} \times D^{4/3} \times \{ln (P_0 / P_1)\}^{1/3} \cdots (7)$$

$t_1$ is the time (s) elapsed from when addition of the Al-containing substance is started until the molten steel present inside the vacuum vessel at the start of addition of the Al-containing substance has circulated and become displaced, $W_{Re\_Al}$ is mass (kg) of metallic Al used for a deoxidation reaction during the time $t_1$,
$Q_{Al\text{-}O}$ is heat (kJ/kg-Al) of the oxidation reaction of Al,
$C_{steel}$ is specific heat of the molten steel, 0.188 (kJ/kg/°C),

$W_{Re\_STEEL}$ is mass (kg) of molten steel used for the deoxidation reaction during the time $t_1$,

$V_{Al}$ is the addition rate (kg/s) of metallic Al,

$X_{Al}$ is the Al content (mass%) in the Al-containing substance,

$Q_{Al\_Alloy-C}$ is sensible heat and latent heat (kJ/kg) of the Al-containing substance,

$W_V$ is mass (kg) of molten steel inside the vacuum vessel,

$Q_{cir}$ is the circulation flow rate (kg/s),

K is the constant (190),

G is the flow rate of the circulation gas (Nl/min),

D is the inside diameter (m) of the snorkel,

$P_0$ is the atmospheric pressure (101325 Pa),

$P_1$ is the degree of vacuum (Pa),

$a_O$ is oxygen activity (ppm) in the molten steel, and

$f_O$ is the coefficient of oxygen activity in the molten steel.

The oxygen activity in the molten steel is measured using an oxygen measuring probe before the deoxidation. The Al addition rate is calculated from temporal changes in a measured weight value of an alloy hopper during addition, or is obtained by determining timings of the start of addition and the end of addition using an in-vessel monitoring camera, obtaining the time taken to add Al, and dividing the total amount added by the addition time.

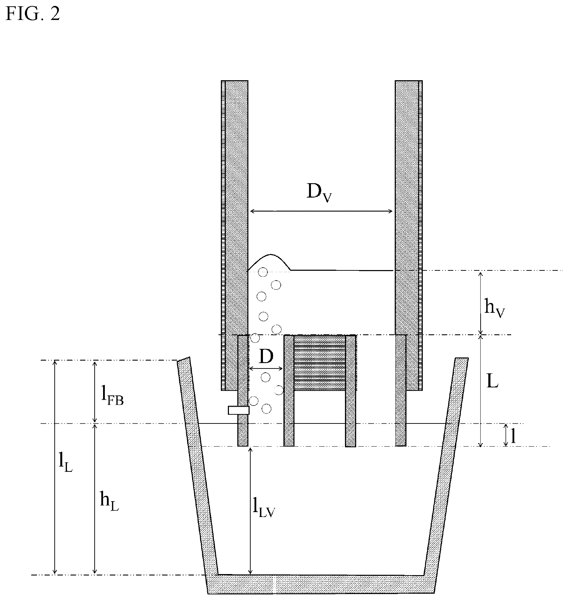

The mass $W_V$ of the molten steel inside the vacuum vessel is expressed by the following Formula (8) and Formula (9). Each length is defined in FIG. 2.

$$W_V = \pi \,/\, 4 \cdot D_V{}^2 \times h_V \times \rho_L g \cdots (8)$$

$$h_V = (P_0 - P_1) \,/\, (\rho_L g) + 1 - L \quad \cdots (9)$$

Here, $D_V$ is the inside diameter (m) of the vacuum vessel,

$h_V$ is the height (m) of the molten steel inside the vacuum vessel,

$\rho_L g$ is the density (kg/m$^3$) of the molten steel,

l is the depth (m) of immersion of the snorkel in the molten steel, and

L is the height (m) from the lower end of the snorkel to the bed part of the vacuum vessel.

The depth l of immersion of the snorkel in the molten steel is expressed by the following Formula (10):

$$l = l_L - l_{FB} - l_{LV} \quad \cdots (10)$$

Here, $l_L$ is the distance (m) from the bottom of the ladle to the upper end of the ladle,

$l_{FB}$ is the distance (m) from the upper end of the ladle to the surface of the molten steel in the ladle, and

$l_{LV}$ is the distance (m) from the lower end of the snorkel to the bottom of the ladle.

For $l_{FB}$, the height of the surface of the molten steel is measured using a molten steel level gauge, or a metal rod is immersed into the molten steel inside the ladle and the length of the dissolved portion is measured. $l_{LV}$ is obtained from a relative distance between the ladle and the vacuum vessel that is acquired from the control system.

Operating parameters for meeting Formula (1) are the degree of vacuum, the circulation gas flow rate, and the Al addition rate. That is, the temperature change amounts $\Delta T_1$ and $\Delta T_2$ at the site of the Al deoxidation reaction are controlled mainly through the degree of vacuum, the circulation gas flow rate, and the Al addition rate. As for the degree of vacuum and the circulation gas flow rate, increasing the absolute value of $\Delta T_2$ requires lowering the degree of vacuum or reducing the circulation gas flow rate. As then the refining efficiency degrades and the treatment time becomes longer, it is desirable to adjust the Al addition rate. The Al addition rate is adjusted by increasing or decreasing the degree of opening of the alloy hopper.

However, there is a limit to increasing the Al addition rate through the degree of opening of the hopper. The efficiency can be further enhanced by using an Al-containing substance with the Al content of 80% or less and increasing the sensible heat per amount of Al added.

The present technique can be applied to any vacuum refining equipment that are of a type that circulates molten steel between a vacuum vessel and a ladle like a DH vacuum degassing equipment and a REDA vacuum degassing equipment. As Formula (7) for obtaining the circulation amount $Q_{cir}$ of the molten steel is specific to an RH vacuum degassing equipment, when applying the present technique to a DH vacuum degassing equipment or a REDA vacuum degassing equipment, it is necessary to measure beforehand the time taken for additive alloys, such as Cu, to mix uniformly, and obtain the circulation amount of molten steel for each operation condition.

The Al content in the Al-containing substance to be added: 30 to 80 mass%

One of the causes for Al loss in Al deoxidation of molten steel is that Al is evaporated by molten steel that has locally reached a high temperature due to the heat of the deoxidation reaction. Reducing the Al content in the Al-containing substance to be added and increasing the sensible heat per amount of Al to be added can increase the temperature drop amount $\Delta T_2$ due to the sensible heat to more efficiently reduce the evaporation of Al. Therefore, it is preferable that the Al content in the Al-containing substance to be added be set to 80 mass% or less.

On the other hand, when the Al content in the Al-containing substance to be added is too low, the total amount of Al-containing substance to be added increases and the treatment time becomes longer, and moreover, the temperature of molten steel being treated may drop to or below the solidification temperature inside the vacuum vessel. Therefore, it is desirable that the Al content in the Al-containing substance to be added be set to 30 mass% or more.

As for the type of Al-containing substance to be used, it is preferable that ferroaluminum alloy FeAl be used to avoid interfering with the adjustment of other ingredients of the molten steel. Alternatively, an Al alloy including an ingredient other than iron may be used according to a target composition.

The range of the Al concentration in steel is 0.02 mass% or less

As the Al yield is improved by the deoxidation refining method of the present invention, variation in the ingredient amount of Al in steel material produced by an iron and steel production process including this deoxidation refining method can be reduced.

Specifically, the range of the Al concentration in steel after the deoxidation step according to the deoxidation refining method of the present invention can be 0.02 mass% or less.

Here, the range of the Al concentration in steel refers to the range of variation among a certain number of charges (specifications, properties, etc.) in the amount (mass%) of Al ingredient in steel after deoxidation refining of each charge (an amount of steel discharged at one time) in a treatment of steel types that have the same target range of the Al concentration in steel. For example, the range of the Al concentration in steel may be set as a standard range of the Al ingredient.

The range of variation is a value obtained by multiplying a standard deviation of actual values of the ingredient amount of Al in steel in the certain number of charges by six.

When the range of the Al concentration in steel becomes 0.02 mass% or less, it can be expected that the ranges of the amounts of chemical ingredients of product specifications are narrowed or that deviation from the target amounts of chemical ingredients is prevented.

When the Al yield is increased to 85% or more by the deoxidation refining method of the present invention, the range of the Al concentration in steel can become 0.02 mass% or less. This is because the variation in the Al concentration in deoxidized steel is mainly attributable to the variation in the Al yield, so that bringing the Al yield close to 100% can reduce the variation in the Al yield. Another factor contributing to reducing the variation in the Al concentration is that, as the Al yield improves, the required amount of Al to be added for a target Al concentration decreases.

Examples

300 tons of molten steel produced by performing decarburization refining of molten pig iron in a converter was discharged from the converter into a ladle, and vacuum refining of the molten steel inside the ladle was performed by an RH vacuum equipment. The subject steel type was an ultralow-carbon steel type for which the standard upper limit of [C] was 25 ppm. The ingredient composition of the molten steel before vacuum refining was as follows: C; 0.04 to 0.06 mass%, Si; 0.15 to 0.25 mass%, Mn; 0.1 to 0.5 mass%, P; 0.02 mass% or less, and S; 0.003 mass% or less. The temperature of the molten steel before deoxidation was 1580 to 1630°C, and oxygen activity $a_O$ in the molten steel before deoxidation was 300 to 600 ppm. The degree of vacuum was 267 Pa, and the circulation gas flow rate was 2500 Nl/min.

As the Al-containing substance, metallic Al containing 99% Al and FeAl alloys respectively containing 20%, 40%, 70%, 80%, and 90% Al were used.

The Al yield was evaluated at various values of $\Delta T_1$ and $\Delta T_2$ while mainly the Al addition rate $V_{Al}$ was changed within the range of 10 to 25 kg/s.

The experiment was conducted for 30 charges under each condition, and the Al yield and the Al-containing substance addition time were evaluated using average values of the 30 charges.

The range of the Al concentration in the steel was calculated from the standard deviation of the Al concentration in the steel after the deoxidation under each of the conditions (Nos. 1 to 10).

For the numerical values in Formulae (2) to (10), the following values were set:

$t_1$: 4.2 (s),
$W_{Re\_Al}$: 4 to 7 (kg),
$Q_{Al-O}$: 27045 (kJ/kg-Al),
$C_{STEEL}$: specific heat of molten steel, 0.188 (kJ/kg/°C),
$W_{Re\_STEEL}$: 11757 (kg),
$V_{Al}$: 10 to 25 (kg/s),
$X_{Al}$: 20 to 99 (%), and
$Q_{Al\_Alloy-C}$: 1381 to 2163 (kJ/kg).

When the mass percentage of an ingredient i (including Al) contained in the Al-containing substance to be added and the sensible heat thereof are denoted by $X_i$ and $Q_{i\_C}$ (kJ/kg-i), respectively, the following formula holds:

$$Q_{Al\_Alloy\_C} = \sum_i \left( \frac{X_i}{100} \times Q_{i\_C} \right)$$

, where the calculation was based on $Q_{AlC}$ = 2163 (kJ/kg-Al) and $Q_{Fe\_C}$ = 1186 (kJ/kg-Fe).

$W_V$: 11760 (kg),
$Q_{Cir}$: 2903 (kg/s),
K = 190,
G: 2500 (Nl/min),
D: 0.7 (m),
$P_0$: $1.01325 \times 10^5$ (Pa),
$P_1$: 267 (Pa),
$a_O$: 350 to 500 (ppm),
$f_O$: 1,
$I_L$: 4.0 (m),
$I_{FB}$: 1.2 (m), and
$I_{LV}$: 2.1 (m).

The Al yield was evaluated by Formula (11). The numerator in Formula (11) represents the total sum of the mass of Al consumed by deoxidation and the mass of Al melted in the molten steel after deoxidation, and the denominator represents the total mass of the Al ingredient added.

$$e_{Al} = \{(a_O / f_O \times 1.0 \times 10^{-6} \times 54 / 48 + [\%Al] / 100) \times W\} \times 100 / (W_{Al} \times X_{Al} / 100) \cdots (11) \tag{11}$$

Here, $e_{Al}$ is the yield (%) of Al,

[%Al] is the Al concentration (mass%) in the deoxidized molten steel,
W is mass of molten steel treated, 300 (ton),
$W_{Al}$ is mass (kg) of metallic Al or Al alloy added, and
$X_{Al}$ is the Al content (mass%) in the Al-containing substance.
[%Al] was obtained from an analytical value of a metal sample that was extracted after completion of the RH vacuum refining treatment.

The result of this experiment is shown in Table 1. The Al yield refers to a percentage of the total sum of the amount of Al consumed by deoxidation and the amount of Al corresponding to an increase in the Al concentration in the steel with respect to the amount of Al in the Al-containing substance added. In each of the examples of the invention Nos. 1 to 8 that met the condition that the absolute value of the temperature drop amount $\Delta T_2$ of Al added exceeded the absolute value of the temperature rise amount $\Delta T_1$ of Al added, a favorable result was obtained with the Al yield of 70% or more. The addition of Al at all levels was performed in a high vacuum of 267 Pa or less, and the treatment time was not prolonged for re-evacuation.

In each of the examples of the invention Nos. 5 to 8 in which the Al content in the Al-containing substance added was 80 mass% or less, an even more favorable result was obtained with the Al yield of 85% or more.

However, while a high Al yield was also obtained when the Al content was less than 30 mass% as in the example of the invention No. 5, due to an increase in the required amount of Al to be added, the addition time became as long as one minute or longer and the evacuation treatment time was prolonged.

Therefore, the Al yield taking the treatment time into account was classified into three levels as follows and indicated as evaluation in the rightmost column of Table 1.

A: The Al yield is 85% or more and the Al addition time is shorter than one minute;
B: Either the Al yield is 70% or more and less than 85% and the Al addition time is shorter than one minute, or the Al yield is 85% or more and the Al addition time is one minute or longer; and
C: The Al yield is less than 70%.

In the examples of the invention Nos. 5 to 8 in which the Al yield was 85% or more, the final variation in the concentration of the Al ingredient obtained by extracting and analyzing a sample in a casting step had the range of 0.02 mass% or less.

By contrast, in the comparative examples Nos. 9 and 10 in which the Al yield was less than 70%, the final variation in the concentration of the Al ingredient had the range of 0.035 mass% or less, and thus the variation in the concentration turned out to be greater than that in the examples of the invention.

[Table 1]

| No. | Type of Al | Al content | Before deoxidation $a_0$ | Al addition rate $V_{Al}$ | ΔT1 | ΔT2 | ΔT1+ΔT2 | Al yield | Addition time | Al concentration range | Evaluation | Remarks |
|---|---|---|---|---|---|---|---|---|---|---|---|---|
| | | mass% | ppm | kg/s | °C | °C | °C | % | min | mass% | | |
| 1 | | | 350±20 | 15 | 13.5 | -14.3 | - 0.8 | 79 | 0.34 | ≤0.025 | B | Invention Example |
| 2 | Al | 99 | 450±20 | 20 | 17.4 | -19.1 | - 1.7 | 81 | 0.28 | ≤0.025 | B | Invention Example |
| 3 | | | 500±20 | 25 | 19.3 | -23.8 | - 4.5 | 83 | 0.23 | ≤0.025 | B | Invention Example |
| | | 90 | 450±20 | | 17.4 | -18.9 | - 1.5 | 83 | 0.30 | ≤0.025 | B | Invention Example |
| 5 | | 20 | 450±20 | | 17.4 | -60.5 | -43.1 | 89 | 1.27 | ≤0.020 | B | Invention Example |
| 4 6 | FeAl | 80 | 450±20 | 20 | 17.4 | -21.5 | - 4.1 | 86 | 0.33 | ≤ 0.020 | A | Invention Example |
| 7 | | 70 | 450±20 | | 17.4 | -23.4 | - 6 | 87 | 0.37 | ≤0.020 | A | Invention Example |
| 8 | | 40 | 450±20 | | 17.4 | -34.5 | -17.1 | 89 | 0.64 | ≤0.020 | A | Invention Example |
| 9 | Al | 99 | 400±20 | 10 | 15.5 | - 9.5 | 6 | 52 | 0.83 | ≤0.035 | C | Comparative Example |
| 10 | | | 450±20 | 15 | 17.4 | 14.3 | 31.7 | 63 | 0.48 | ≤0.035 | C | Comparative Example |

Industrial Applicability

The method of the present invention that performs deoxidation refining by adding Al in a steelmaking step of an iron and steel production process can be applied to production of steel materials for which it is required to reduce the production cost and narrow the range of the ingredient amount of Al.

Reference Signs List

| 1 | RH vacuum degassing equipment |
| 2 | Ladle |
| 3 | Molten steel |
| 4 | Slag |
| 5 | Vacuum vessel |
| 6 | Upper vessel |
| 7 | Lower vessel |
| 8 | Up-leg |
| 9 | Down-leg |
| 10 | Circulation gas blowing pipe |
| 11 | Duct |
| 12 | Raw material feed port |
| 13 | Top-blowing lance |
| $D_V$ | Inside diameter of vacuum vessel |
| $D$ | Inside diameter of snorkel |
| $L$ | Height from lower end of snorkel to bed part of vacuum vessel |
| $l$ | Depth of immersion of snorkel in molten steel |
| $l_L$ | Distance from bottom of ladle to upper end of ladle |
| $l_{LV}$ | Distance from lower end of snorkel to bottom of ladle |
| $l_{FB}$ | Distance from upper end of ladle to surface of molten steel in ladle |
| $h_V$ | Height of molten steel inside vacuum vessel |
| $h_L$ | Distance from bottom of ladle to surface of molten steel in ladle |

**Claims**

1. A method for deoxidation refining of molten steel (3) using a vacuum refining equipment, **characterized in that**

an Al-containing substance is added to molten steel (3) inside a vacuum vessel (5), and that temperature changes $\Delta T_1$ and $\Delta T_2$ of the molten steel (3) during Al deoxidation meet Formula (1):

$$\Delta T_1 + \Delta T_2 < 0 \cdots (1),$$

where $\Delta T_1$ and $\Delta T_2$ are temperature changes (°C) respectively defined by:

$$\Delta T_1 = (W_{Re\_Al} \times Q_{Al\text{-}O}) / (C_{steel} \times W_{Re\_STEEL}) \cdots (2)$$

$$\Delta T_2 = -(V_{Al} / 0.01 X_{Al} \times t_1 \times Q_{Al\_Alloy\text{-}C}) / (C_{steel} \times W_{Re\_STEEL}) \cdots (3),$$

$t_1$ is a time (s) elapsed from when addition of the Al-containing substance is started until the molten steel (3) present inside the vacuum vessel (5) at the start of addition of the Al-containing substance has circulated and become displaced,
$W_{Re\_Al}$ is mass (kg) of metallic Al used for a deoxidation reaction during the time $t_1$,
$Q_{Al\text{-}O}$ is heat (kJ/kg-Al) of an oxidation reaction of Al,
$C_{steel}$ is specific heat (kJ/kg/°C) of the molten steel (3),
$W_{Re\_STEEL}$ is mass (kg) of molten steel (3) used for the deoxidation reaction during the time $t_1$, $V_{Al}$ is an addition rate (kg/s) of metallic Al,
$X_{Al}$ is an Al content (mass%) in the Al-containing substance, and

$Q_{Al\_Alloy-C}$ is sensible heat and latent heat (kJ/kg) of the Al-containing substance.

2. The method for deoxidation refining of molten steel (3) according to claim 1, wherein the Al content in the Al-containing substance is 30 to 80 mass%.

3. A method for producing steel material,
   **characterized in that**
   the method includes the method for deoxidation refining of molten steel (3) according to claim 1 or 2 as a deoxidation step, and that the range of an Al concentration in steel after the deoxidation step is 0.02 mass% or less.

## Patentansprüche

1. Verfahren zur Desoxidationsveredelung von geschmolzenem Stahl (3) unter Verwendung einer Vakuumveredelungsanlage,
   **dadurch gekennzeichnet, dass**

   dem geschmolzenen Stahl (3) in einem Vakuumbehälter (5) eine Al-haltige Substanz zugesetzt wird und dass die Temperaturänderungen $\Delta T_1$ und $\Delta T_2$ des geschmolzenen Stahls (3) während der Al-Desoxidation der Formel (1) entsprechen:

$$\Delta T_1 + \Delta T_2 < 0 \cdots (1),$$

   wobei $\Delta T_1$ und $\Delta T_2$ Temperaturänderungen (°C) sind, die jeweils definiert sind durch:

$$\Delta T_1 = (W_{Re\_Al} \times Q_{Al-O}) / (C_{steel} \times W_{Re\_STEEL}) \cdots (2)$$

$$\Delta T_2 = -(V_{Al} / 0{,}01X_{Al} \times t_1 \times Q_{Al\_Alloy-C}) / (C_{steel} \times W_{Re\_STEEL}) \cdots (3),$$

   $t_1$ eine Zeit (s) ist, welche zwischen dem Beginn der Zugabe der Al-haltigen Substanz und dem Zeitpunkt, zu dem der zu Beginn der Zugabe der Al-haltigen Substanz im Vakuumbehälter (5) vorhandene geschmolzene Stahl (3) zirkuliert und verdrängt ist,
   $W_{Re\_Al}$ die Masse (kg) des metallischen Al, das während der Zeit $t_1$ für eine Desoxidationsreaktion verwendet wird, ist,
   $Q_{Al-O}$ die Wärme (kJ/kg-Al) einer Oxidationsreaktion von Al ist,
   $C_{steel}$ die spezifische Wärme (kJ/kg/°C) des geschmolzenen Stahls (3) ist, $W_{Re\_STEEL}$ die Masse (kg) des geschmolzenen Stahls (3) ist, welche für die Desoxidationsreaktion während der Zeit $t_1$ verwendet wird,
   $V_{Al}$ die Zugabegeschwindigkeit (kg/s) von metallischem A ist,
   $X_{Al}$ der Al-Gehalt (Massenprozent) in der Al-haltigen Substanz ist und
   $Q_{Al\_Alloy-C}$ die sensible Wärme und latente Wärme (kJ/kg) der Al-haltigen Substanz ist.

2. Verfahren zur Desoxidationsveredelung von geschmolzenem Stahl (3) gemäß Anspruch 1, wobei der Al-Gehalt in der Al-haltigen Substanz 30 bis 80 Massenprozent beträgt.

3. Verfahren zur Herstellung von Stahlmaterial,
   **dadurch gekennzeichnet, dass**
   das Verfahren das Verfahren zur Desoxidationsveredelung von geschmolzenem Stahl (3) gemäß Anspruch 1 oder 2 als Desoxidationsschritt umfasst und dass der Bereich der Al-Konzentration im Stahl nach dem Desoxidationsschritt 0,02 Massenprozent oder weniger beträgt.

## Revendications

1. Procédé d'affinage, par désoxydation, d'un acier fondu (3) à l'aide d'un équipement d'affinage sous vide,
   **caractérisé en ce que**

une substance contenant Al est ajoutée à de l'acier fondu (3) à l'intérieur d'un récipient à vide (5), et **en ce que** les changements de température $\Delta T_1$ et $\Delta T_2$ de l'acider fondu (3) au cours de la désoxydation de l'Al satisfont la Formule (1) :

$$\Delta T_1 + \Delta T_2 < 0 \ldots (1),$$

où $\Delta T_1$ et $\Delta T_2$ sont des changements de température (en °C) définis respectivement par :

$$\Delta T_1 = (W_{Re\_Al}) \times Q_{Al\text{-}O} / (C_{acier} \times W_{Re\_ACIER}) \ldots (2)$$

$$\Delta T_2 = -(V_{Al} / 0{,}01 X_{Al} \times t_1 \times Q_{Al\_Alliage\text{-}C}) / (C_{acier} \times W_{Re\_ACIER}) \ldots (3),$$

$t_1$ est un temps (en s) écoulé depuis le moment où l'ajout de la substance contenant Al a débuté jusqu'à ce que l'acier fondu (3) présent à l'intérieur du récipient à vide (5) au début de l'ajout de la substance contenant Al a circulé et en vient à être déplacé,

$W_{Re\_Al}$ est la masse (en kg) d'Al métallique utilisé pour une réaction de désoxydation au cours du temps $t_1$,

$Q_{Al\text{-}O}$ est la chaleur (en kJ/kg-Al) d'une réaction d'oxydation d'Al,

$C_{acier}$ est la chaleur spécifique (en kJ/kg/°C) de l'acier fondu (3),

$W_{Re\_ACIER}$ est la masse (en kg) d'acier fondu (3) utilisé pour la réaction de désoxydation au cours du temps $t_1$,

$V_{Al}$ est une vitesse d'ajout (en kg/s) d'Al métallique,

$X_{Al}$ est une teneur en Al (en % en masse) de la substance contenant Al, et

$Q_{Al\_Alliage\text{-}C}$ est la chaleur sensible et la chaleur latente (en kJ/kg) de la substance contenant Al.

2. Procédé d'affinage, par désoxydation, d'un acier fondu (3) selon la revendication 1, dans lequel la teneur en Al de la substance contenant Al est de 30 à 80 % en masse.

3. Procédé de production d'un matériau en acier,
   **caractérisé en ce que**
   le procédé inclut le procédé d'affinage, par désoxydation, d'un acier fondu (3) selon la revendication 1 ou 2 en tant qu'étape de désoxydation, et **en ce que** la plage de concentration d'Al dans l'acier après l'étape de désoxydation est de 0,02 % en masse ou moins.

FIG.1

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H03211216 A
- US 2009019968 A1
- JP 2002241832 A

**Non-patent literature cited in the description**

- *Sumitomo Metal Technical Report*, vol. 25, 30